# EUROPÄISCHE PATENTSCHRIFT

(11) **EP 3 921 903 B1**
(45) Veröffentlichungstag und Bekanntmachung des Hinweises auf die Patenterteilung: **27.03.2024**
(21) Anmeldenummer: 21707613.2
(22) Anmeldetag: 26.01.2021
(51) Int. Cl.: H01T 13/54, H01T 13/46, H01T 13/39, H01T 21/02

(54) **VORKAMMERZÜNDKERZE, ZÜNDELEKTRODE FÜR EINE VORKAMMERZÜNDKERZE UND VERFAHREN ZUR HERSTELLUNG EINER ZÜNDELEKTRODE**
PRECHAMBER SPARK PLUG, IGNITION ELECTRODE FOR A PRECHAMBER SPARK PLUG, AND METHOD FOR PRODUCING AN IGNITION ELECTRODE
BOUGIE D'ALLUMAGE À PRÉCHAMBRE, ÉLECTRODE D'ALLUMAGE POUR UNE BOUGIE D'ALLUMAGE À PRÉCHAMBRE ET PROCÉDÉ DE FABRICATION D'UNE ÉLECTRODE D'ALLUMAGE

(30) Priorität: 27.04.2020 DE 102020205320
(43) Veröffentlichungstag der Anmeldung: 15.12.2021
(73) Patentinhaber: DKT Verwaltungs-GmbH, 69190 Walldorf (DE)
(72) Erfinder: KUHNERT, Steffen, 69126 Heidelberg (DE)
(74) Vertreter: Ullrich & Naumann PartG mbB
(86) Internationale Anmeldenummer: PCT/DE2021/200004
(87) Internationale Veröffentlichungsnummer: WO 2021/219169

(56) Entgegenhaltungen:
- EP-B1- 2 413 442
- WO-A1-2014/177169
- DE-A1-102015 207 042

## Beschreibung

Die Erfindung betrifft eine Vorkammerzündkerze mit einem Gehäuse, das an seinem vorderen Ende eine Vorkammer mit einer darin angeordneten Zündelektrode aufweist, wobei die Zündelektrode eine Basis und von der Basis abragende Elektrodenbeinchen umfasst, wobei die Zündelektrode aus einem aus einer Iridium-Legierung bestehenden Blech herausgearbeitet ist und die Beinchen zur Bildung einer Korbform aus der Ebene der Basis herausgebogen sind.

Des Weiteren betrifft die Erfindung eine Zündelektrode für eine Vorkammerzündkerze sowie ein Verfahren zur Herstellung einer solchen Zündelektrode.

Vorkammerzündkerzen der hier in Rede stehenden Art sind hinlänglich aus der Praxis bekannt. Lediglich beispielhaft sei dazu auf die EP 2 413 442 B1 verwiesen.

Die bekannte Vorkammerzündkerze hat ein Gehäuse, das an seinem vorderen Ende eine Vorkammer mit mehreren Öffnungen ausweist. Mit einer Bogenentladung kann ein Kraftstoff-Luft-Gemisch in der Vorkammer entzündet werden, so dass aus den Öffnungen der Vorkammer brennendes Gasgemisch in Form sogenannter Fackelstrahlen austritt und das Kraftstoff-Luft-Gemisch im Brennraum eines Motors entzündet.

In dem Gehäuse einer solchen Vorkammerzündkerze ist ein Isolator angeordnet, der eine Zündelektrode trägt. Die Zündelektrode bei Vorkammerzündkerzen wird manchmal als Mittelelektrode oder Elektrodenträger bezeichnet. Die Zündelektrode hat mehrere Elektrodenbeinchen, die sich ausgehend von der Basis zunächst radial nach außen erstrecken und mit einem anschließenden Abschnitt entlang einer Vorkammerwand verlaufen. Dieser vordere Abschnitt der Elektrodenbeinchen bildet zwischen sich und der Vorkammerwand eine Funkenstrecke für eine Bogenentladung. Die Vorkammerwand kann dabei nach innen gerichtete Vorsprünge, beispielsweise Noppen, etc., aufweisen, die den Elektrodenbeinchen zugewandt sind. Die Funkenstrecke für die Bogenentladung ist auch in einem solchen Fall zwischen dem vorderen Abschnitt der Elektrodenbeinchen und der Vorderkammerwand, genauer gesagt zwischen Elektrodenbeinchen und Wandvorsprung, definiert.

Ein Vorteil von Vorkammerzündkerzen ist ihre im Vergleich zu anderen Zündkerzentypen hohe Lebensdauer und ein sehr gutes Zündverhalten. Diese Vorteile beruhen u.a. darauf, dass die Zündelektrode mehrere Elektrodenarme umfasst, von denen jeweils ein Lichtbogen ausgeht.

Die Elektrodenbeinchen werden regelmäßig ausgestanzt und durch anschließendes Biegen zu einer Korbform aufgestellt. Dies ist nur dann problemlos möglich, wenn das Material der Zündelektrode, insbesondere der Elektrodenbeinchen, nicht zu spröde ist.

Gemäß Stand der Technik hat sich herausgestellt, dass Zündelektroden aus einer Iridium-Legierung aufgrund ihres hohen Schmelzpunkts einen geringen Verschleiß im Betrieb haben. Der vorteilhaft hohe Schmelzpunkt von Iridium und Iridium-Basislegierungen ist allerdings mit äußerst spröden Materialeigenschaften verknüpft. Insbesondere beim Umformen bzw. Biegen der Elektrodenbeinchen treten Risse auf, die bei der Umformung zum Abbrechen der Beinchen führen können.

Dieser Problematik ist man bislang dadurch begegnet, dass man die Elektrodenbeinchen sehr breit ausgeführt hat, beispielsweise mit einer Breite von 0,9 mm. Bei geringerer Dicke war der Beinchenquerschnitt somit äußerst "rechteckig". Aus einer solchen Ausgestaltung ergeben sich erhebliche Nachteile im Betrieb. Ein solch schlechtes Verhältnis von Querschnittsumfang zu Querschnittsfläche der einzelnen Beinchen führt zu einer hohen Wärmeübertragung bei schlechter Wärmeableitung. Bei der Zündung erfolgt der Funkenschlag meist von den Ecken und Kanten der Elektroden aus. Eine hohe Anzahl an scharfen Ecken/Kanten senkt den Zündspannungsbedarf. Aufgrund dieser Situation verrunden die Beinchen sehr schnell und der Zündspannungsbedarf steigt. Dies führt wiederum zu einem erhöhten Verschleiß.

Der vorliegenden Erfindung liegt daher die Aufgabe zugrunde, eine Vorkammerzündkerze der gattungsbildenden Art, d.h. mit einer Zündelektrode aus einer Iridium-Legierung, anzugeben, bei der insbesondere filigrane Elektrodenbeinchen frei von Rissen sind, ungeachtet der relativ spröden Iridium-Legierung. Außerdem soll eine entsprechende Zündelektrode sowie ein Verfahren zur Herstellung der Zündelektrode angegeben werden.

Voranstehende Aufgabe ist in Bezug auf die Vorkammerzündkerze durch die Merkmale des Anspruch 1 gelöst. Danach ist die Zündelektrode und sind insbesondere die Elektrodenbeinchen der Zündelektrode mittels Laserschneiden aus dem Blech herausgetrennt.

Im Gegensatz zum Stand der Technik wird die Zündelektrode, umfassend die Basis und die Elektrodenbeinchen, nicht aus einem aus einer Iridium-Legierung bestehenden Blech gestanzt, wird vielmehr der Zündelektroden-Rohling mittels Laserschneiden aus dem Blech herausgetrennt bzw. herausgeschnitten. Das Laserschneiden anstelle dem Stanzen führt dazu, dass insbesondere an den Kanten des Elektrodenkreuzes keinerlei Anrisse entstehen. Ausgehend von einem rissfreien Rohling - umfassend die Basis und mehrere Elektrodenbeinchen - lassen sich die Elektrodenbeinchen besser umformen, da der Rohling frei von Rissen ist. So lässt sich eine Zündelektrode herstellen, ohne die im Stand der Technik beschriebenen Nachteile, die ganz überwiegend auf einer Rissbildung beim bislang üblichen Stanzen zurückzuführen ist.

Die Beinchen können in etwa orthogonal aus der Ebene der Basis herausgebogen sein. In vorteilhafter Weise sind die Beinchen unter einem Winkel < 90°, vorzugsweise 81° bis 89°, aus der Ebene der Basis herausgebogen. Dies bedeutet, dass der so gebildete "Korb" sich zum freien Ende der Beinchen hin zumindest geringfügig aufweitet. Innerhalb der Vorkammer bedeutet dies, dass sich die Beinchen mit ihrem freien Ende der Innenwandung der Vorkammer und somit der Massenelektrode nähern. Dies begünstig das Zündverhalten.

Des Weiteren ist es vor Vorteil, wenn die Elektrodenbeinchen durch Heißbiegen in ihre endgültige Form umgeformt bzw. gebogen werden, nämlich in die Korbform der Zündelektrode verbracht werden. Durch diese Maßnahme wird einer Rissbildung beim Umformen entgegengewirkt.

Wie bereits zuvor ausgeführt, besteht die Zündelektrode aus einer Iridium-Legierung, insbesondere aus einer Iridium-Basislegierung, die mindestens 50 Gew. -% Iridium umfasst. Beispielhaft kann die Zündelektrode aus IrRh5, oder aus IrRh10 oder aus IrRh3Nb1, etc., bestehen. Diese Legierungen haben den Vorteil eines hohen Schmelzpunkts, der zu einem vergleichsweise geringen Verschleiß im Betrieb der Zündelektrode führt.

Die Zündelektrode umfasst zumindest zwei aufgerichtete Elektrodenbeinchen. Sie kann beispielshaft vier, sechs oder acht Elektrodenbeinchen umfassen, die möglichst filigran ausgebildet sind.

Auch ist es denkbar, dass die Zündelektrode eine Anordnung von zwei Einzelelektroden umfasst, die übereinander bzw. hintereinander angeordnet sind, wobei die Anzahl der jeweiligen Elektrodenbeinchen je Zündelektrode identisch ist oder auch voneinander abweichen kann. Die miteinander kombinierten Zündelektroden können dabei mit oder ohne Abstand zueinander miteinander verschweißt sein. Dabei ist eine feste Zuordnung der Zündelektroden zueinander realisiert. Außerdem ist es denkbar, dass die Einzelelektroden mit ihren Elektrodenbeinchen zueinander verdreht sind, so dass die Elektrodenbeinchen nicht fluchten und sich im gebogenen Zustand zu der Korbform ergänzen. Die Anordnung zweier miteinander kombinierter Zündelektroden führt zu einer Vorkehrung von insgesamt vorzugsweise acht bis zwölf Elektrodenbeinchen, an deren Enden jeweils eine Bogenentladung stattfinden kann.

Die Elektrodenbeinchen einer Zündelektrode können identisch oder unterschiedlich ausgebildet sein. Sie sind vorzugsweise in etwa quadratisch im Querschnitt. Gemäß der Erfindung haben die Elektrodenbeinchen eine Dicke im Bereich von 0,2 mm bis 0,5 mm und eine Breite im Bereich von 0,3 mm bis 0,6 mm. Daraus ergibt sich ein Verhältnis von Dicke/Breite im Bereich von 0,33 bis 1,67. Ein bevorzugter Bereich hat ein Verhältnis von 0,4 (leicht rechteckig) bis 1,0 (quadratisch).

Da bei der Herstellung, ungeachtet des Materials, Risse vermieden werden, ist eine möglichst filigrane Ausgestaltung der Elektrodenbeinchen möglich.

In Bezug auf die erfindungsgemäße Zündelektrode ist die zugrundeliegende Aufgabe durch den nebengeordneten Anspruch 12 gelöst, wonach die Zündelektrode mittels Laserschneiden aus dem Blech herausgetrennt ist. Alle weiteren Merkmale der Zündelektrode sind bereits zuvor erörtert worden.

Das erfindungsgemäßen Verfahren ist durch die Merkmale des weiter nebengeordneten Anspruchs 13 gelöst, wonach die Zündelektrode mittels Laserschneiden aus dem Blech herausgeschnitten wird. Weitere verfahrensspezifische Merkmale sind ebenfalls bereits zuvor ausgeführt worden, so dass sich weitere Ausführungen dazu erübrigen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht, teilweise geschnitten, ein Ausführungsbeispiel einer Vorkammerzündkerze,
- Fig. 2: in einer schematischen Ansicht, teilweise weggebrochen, einen Blick in die Vorkammer der Vorkammerzündkerze,
- Fig. 3: in einer schematischen Draufsicht den mittels Laserschneiden erzeugten Rohling einer Zündelektrode mit vier Elektrodenbeinchen,
- Fig. 4: in einer schematischen Seitenansicht den Gegenstand aus Fig. 3,
- Fig. 5: in einer schematischen Ansicht eine vier Elektrodenbeinchen umfassende Zündelektrode, mit zu einem Korb gebogenen Elektrodenbeinchen mit in etwa quadratischem Querschnitt,
- Fig. 6: in einer schematischen Ansicht eine vier Elektrodenbeinchen umfassende Zündelektrode, mit zu einem Korb gebogenen Elektrodenbeinchen mit in etwa rechteckigem Querschnitt,
- Fig. 7: in einer schematischen Ansicht eine sechs Elektrodenbeinchen umfassende Zündelektrode, mit zu einem Korb gebogenen Elektrodenbeinchen mit in etwa rechteckigem Querschnitt,
- Fig. 8: in einer schematischen Ansicht die Kombination zweier Elektroden mit jeweils vier Elektrodenbeinchen, und
- Fig. 9: in einer schematischen Ansicht die Kombination zweier Elektroden mit jeweils sechs Elektrodenbeinchen.

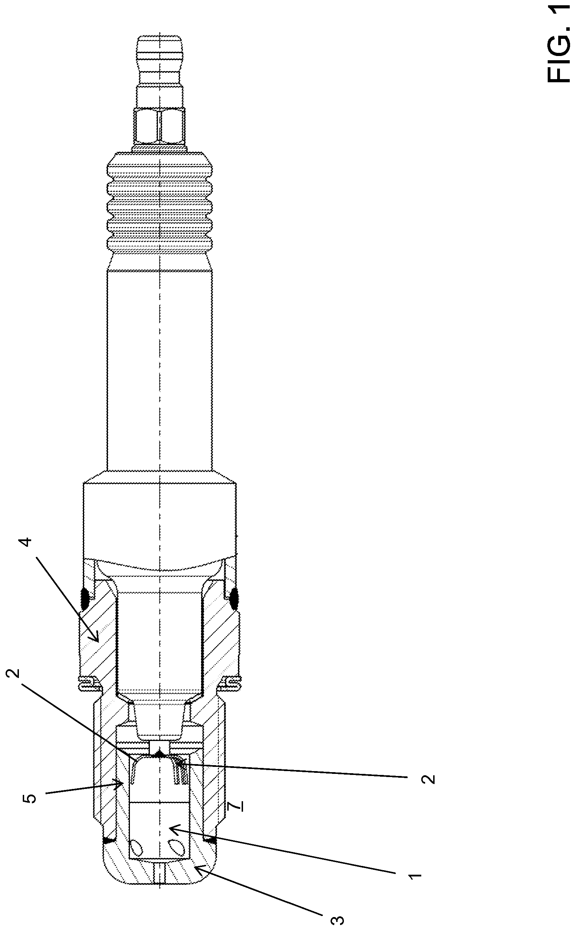

Figur 1 zeigt den grundsätzlichen Aufbau einer Vorkammerzündkerze, wobei es im Rahmen der vorliegenden Erfindung lediglich um die Vorkammer 1 und die darin angeordnete Zündelektrode 2 geht.

Die Vorkammer 1 ist im Wesentlichen durch die endseitige Kappe 3 gebildet, die mit Überströmbohrungen ausgestattet ist. Die Kappe 3 ist mit einem Gehäuse 4 verschweißt. Außerdem wird durch die Innenwand der Kappe 3 eine Massenelektrode 5 gebildet. Zur Funktion der Vorkammerzündkerze sei auf den in der Beschreibungseinleitung genannten Stand der Technik verwiesen.

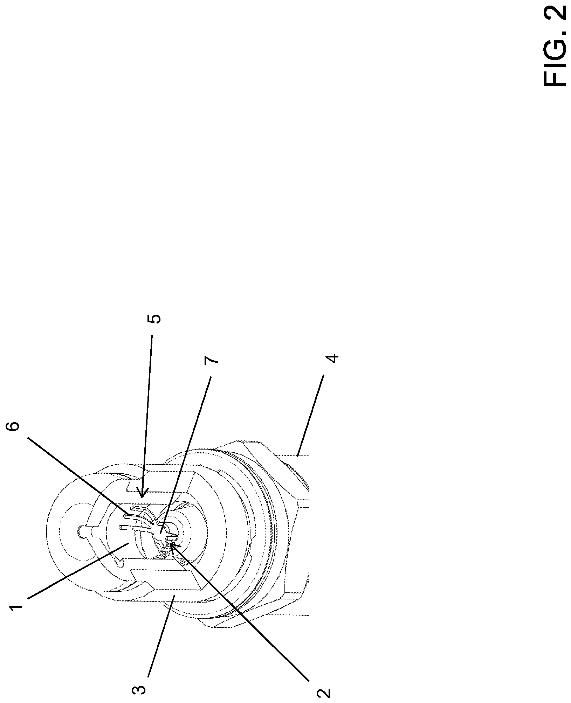

Figur 2 zeigt einen Blick in die Vorkammer 1, wobei dort die Kappe 3 mit der Massenelektrode 5 erkennbar ist. Im Inneren der Vorkammer 1 sitzt die Zündelektrode 2, die bei dem in Figur 2 gezeigten Ausführungsbeispiel als Zündelektrode 2 mit insgesamt sechs Elektrodenbeinchen 6 ausgeführt ist. Die Elektrodenbeinchen 6 sind in Korbform von ihrer Basis 7 weg gebogen.

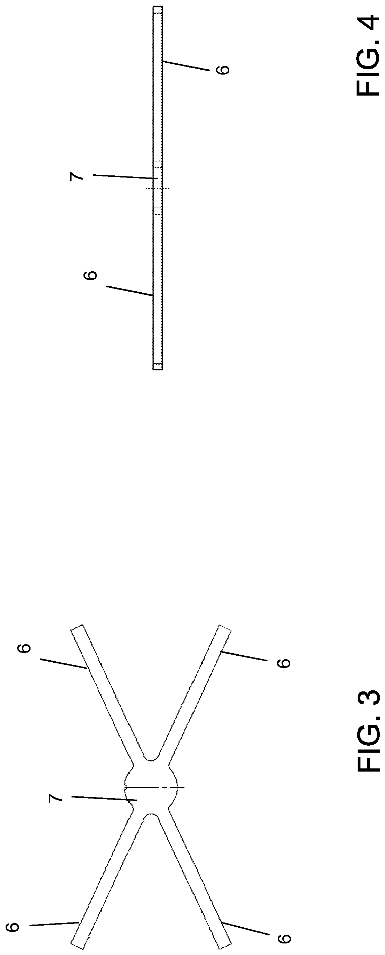

Figur 3 zeigt in einer schematischen Draufsicht den durch Laserschneiden aus einem Blech ausgeschnittenen Rohling, wobei das Blech aus einer Iridium-Legierung besteht. Es handelt sich um einen Rohling, von dessen Basis 7 sich insgesamt vier Elektrodenbeinchen 6 weg erstrecken. Die Elektrodenbeinchen 6 sind paarweise angeordnet und können in einem Winkel von 20 Grad bis 70 Grad zueinander ausgerichtet sein. Die Elektrodenbeinchen 6 können eine Länge zwischen 6 mm und 16 mm und eine Dicke bzw. Breite von 0,3 mm bis 0,6 mm haben.

Figur 4 zeigt den Gegenstand aus Figur 3 in einer Seitenansicht, wonach sich von der Basis 7 aus die Elektrodenbeinchen 6, im noch ungebogenen Zustand, nach außen erstrecken.

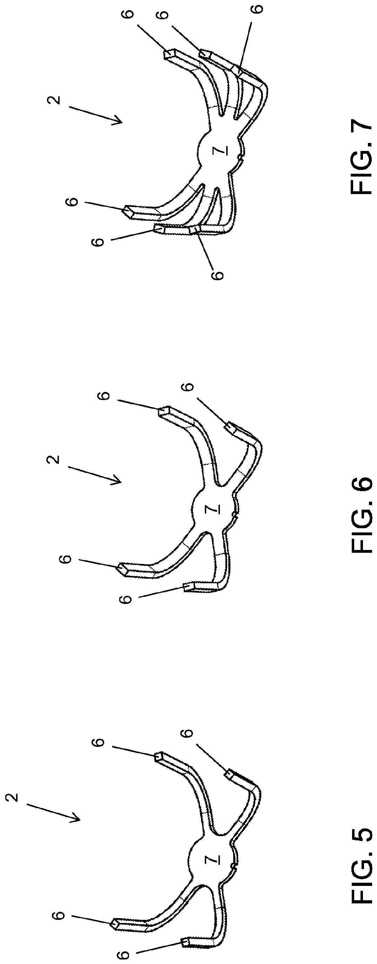

Figur 5 zeigt in einer schematischen Ansicht eine Zündelektrode 2, die aus dem Rohling gemäß den Figuren 3 und 4 gebogen ist. Das Biegen der Elektrodenbeinchen 6 erfolgt durch Heißbiegen, bis die Elektrodenbeinchen 6 die Korbform definieren und mehr oder weniger orthogonal von der Basis 7 zum freien Ende hin gebogen sind. Gemäß Figur 5 ist der Querschnitt der Elektrodenbeinchen 6 in etwa quadratisch.

Die Zündelektrode 2 gemäß Figur 6 unterscheidet sich von der Zündelektrode 2 aus Figur 5 dadurch, dass die Elektrodenbeinchen 6 etwas breiter als dick ausgeführt sind. Der Querschnitt ist in etwa rechteckig.

Figur 7 zeigt eine Zündelektrode 2 mit insgesamt sechs Elektrodenbeinchen 6, wobei jeweils drei der Elektrodenbeinchen 6 nahe beieinander und in zwei Dreiergruppen einander gegenüberliegend ausgebildet sind. Der Querschnitt ist wie bei der Ausführungsform gemäß Figur 6 eher rechteckig.

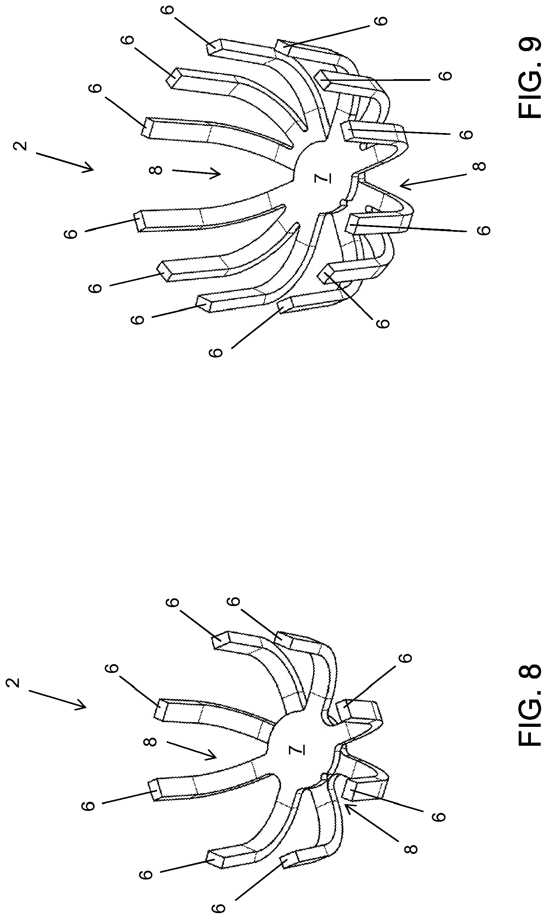

Figur 8 zeigt eine Zündelektrode 2, die aus einer Kombination von zwei Einzelelektroden 8 mit je vier Elektrodenbeinchen 6 besteht. Die Einzelelektroden 8 sind fest und unmittelbar miteinander verschweißt und ergänzen sich zu einer Zündelektrode 2 mit insgesamt acht Elektrodenbeinchen 6.

Figur 9 zeigt die Kombination zweier Einzelelektroden 8, wobei jede Einzelelektrode 8 sechs Elektrodenbeinchen 6 ausweist. Insgesamt ergibt sich aus der Kombination der beiden Einzelelektroden 8 eine Zündelektrode 2 mit zwölf Elektrodenbeinchen 6.

Bei erhöhter Elektrodenzahl ergibt sich eine beachtliche Verschleißreserve, die die Lebensdauer der Zündelektrode 2 erhöht.

Zu den Figuren 1 und 5 bis 9 sei in Bezug auf die Ausrichtung der Elektrodenbeinchen 6 angemerkt, dass diese unter einem Winkel < 90° aus der Ebene der Basis 2 herausgebogen sind, wobei der Winkel vorzugsweise im Bereich zwischen 81 ° und 89° liegt, so dass im eingebauten Zustand entsprechend den Figuren 1 und 2 die Elektrodenbeinchen 6 zum freien Ende hin sich der Massenelektrode 5 bzw. Innenwand der Kappe 3 nähern. Der so gebildete "Korb" erweitert sich somit zum freien Ende der Elektrodenbeinchen 6 hin.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Vorkammer
- 2: Zündelektrode (Mittelelektrode oder Basis mit Elektrodenbeinchen)
- 3: Kappe
- 4: Gehäuse
- 5: Massenelektrode (Innenwand der Kappe)
- 6: Elektrodenbeinchen (der Zündektrode)
- 7: Basis (Mittelelektrode der Zündelektrode)
- 8: Einzelelektrode (zur Kombination mit einer zweiten Einzelelektrode)

## Patentansprüche

1. Vorkammerzündkerze mit einem Gehäuse, das an seinem vorderen Ende eine Vorkammer mit einer darin angeordneten Zündelektrode (2) aufweist, wobei die Zündelektrode eine Basis (7) und von der Basis abragende Elektrodenbeinchen (6) umfasst, wobei die Zündelektrode (2) aus einem aus einer Iridium-Legierung bestehenden Blech herausgearbeitet ist und die Beinchen (6) zur Bildung einer Korbform aus der Ebene der Basis (7) herausgebogen sind, wobei die Zündelektrode, insbesondere die Elektrodenbeinchen, mittels Laserschneiden aus dem Blech herausgetrennt ist/sind,
**dadurch gekennzeichnet, dass** die Elektrodenbeinchen (6) eine Dicke im Bereich von 0,2 mm bis 0,5 mm und eine Breite im Bereich von 0,3 mm bis 0,6 mm haben, woraus sich ein Verhältnis von Dicke/Breite im Bereich von 0,33 bis 1,67 mit einem bevorzugten Bereich von 0,4 (leicht rechteckig) bis 1,0 (quadratisch) ergibt.

2. Vorkammerzündkerze nach Anspruch 1, **dadurch gekennzeichnet, dass** die Beinchen (6) in etwa orthogonal aus der Ebene der Basis (7) herausgebogen sind.

3. Vorkammerzündkerze nach Anspruch 1, **dadurch gekennzeichnet, dass** die Beinchen (6) unter einem Winkel < 90°, vorzugsweise 81°bis 89°, aus der Ebene der Basis (7) herausgebogen sind.

4. Vorkammerzündkerze nach einem der Ansprüche 1 bis 3, **dadurch gekennzeichnet, dass** die Elektrodenbeinchen (6) durch Heißbiegen in Ihre Korbform gebogen sind.

5. Vorkammerzündkerze nach einem der Ansprüche 1 bis 4, **dadurch gekennzeichnet, dass** die Zündelektrode (2) aus IrRh5, oder aus IrRh10 oder aus IrRh3Nb1 besteht.

6. Vorkammerzündkerze nach einem der Ansprüche 1 bis 5, **dadurch gekennzeichnet, dass** die Zündelektrode (2) vier, sechs oder acht Elektrodenbeinchen (6) umfasst.

7. Vorkammerzündkerze nach einem der Ansprüche 1 bis 6, **dadurch gekennzeichnet, dass** die Zündelektrode (2) eine Anordnung von zwei Einzelelektroden (8) übereinander bzw. hintereinander umfasst, wobei die Anzahl der jeweiligen Elektrodenbeinchen (6) identisch ist oder voneinander abweicht.

8. Vorkammerzündkerze nach Anspruch 7, **dadurch gekennzeichnet, dass** die Zündelektroden (2) mit oder ohne Abstand zueinander miteinander verschweißt sind.

9. Vorkammerzündkerze nach Anspruch 7 oder 8, **dadurch gekennzeichnet, dass** die Anordnung zweier Einzelelektroden (8) insgesamt acht oder zwölf Elektrodenbeinchen (6) umfasst.

10. Vorkammerzündkerze nach einem der Ansprüche 7 bis 9, **dadurch gekennzeichnet, dass** die Einzelelektroden (8) mit ihren Elektrodenbeinchen (6) zueinander verdreht sind, so dass die Elektrodenbeinchen nicht fluchten und sich im gebogenen Zustand zu der Korbform ergänzen.

11. Vorkammerzündkerze nach einem der Ansprüche 1 bis 10, **dadurch gekennzeichnet, dass** die Elektrodenbeinchen (6) in etwa quadratisch im Querschnitt sind.

12. Zündelektrode (2) für eine Vorkammerzündkerze, die in einem eine Vorkammer (1) umfassenden Gehäuse (4) angeordnet ist, wobei die Zündelektrode (2) eine Basis (7) und von der Basis abragende Elektrodenbeinchen (6) umfasst und aus einem aus einer Iridium-Legierung bestehenden Blech herausgearbeitet ist und wobei die Beinchen (6) in etwa orthogonal zur Basis (7) zur Bildung einer Korbform weggebogen sind, insbesondere für eine Vorkammerzündkerze nach einem der Ansprüche 1 bis 11, wobei die Zündelektrode mittels Laserschneiden aus dem Blech herausgetrennt ist,
**dadurch gekennzeichnet, dass** die Elektrodenbeinchen (6) eine Dicke im Bereich von 0,2 mm bis 0,5 mm und eine Breite im Bereich von 0,3 mm bis 0,6 mm haben, woraus sich ein Verhältnis von Dicke/Breite im Bereich von 0,33 bis 1,67 mit einem bevorzugten Bereich von 0,4 (leicht rechteckig) bis 1,0 (quadratisch) ergibt.

13. Verfahren zur Herstellung einer eine Basis (7) und von der Basis abragende Elektrodenbeinchen (6) umfassenden Zündelektrode (2) für eine Vorkammerzündkerze, wobei die Zündelektrode (2) aus einem aus einer Iridium-Legierung bestehenden Blech ausgeschnitten und danach die Beinchen (6) in etwa orthogonal zur Basis (7) zur Bildung einer Korbform weggebogen werden, insbesondere einer Zündelektrode nach Anspruch 12, vorzugsweise für eine Vorkammerzündkerze nach einem der Ansprüche 1 bis 11, wobei die Zündelektrode mittels Laserschneiden aus dem Blech herausgeschnitten wird,
**dadurch gekennzeichnet, dass** die Elektrodenbeinchen (6) eine Dicke im Bereich von 0,2 mm bis 0,5 mm und eine Breite im Bereich von 0,3 mm bis 0,6 mm haben, woraus sich ein Verhältnis von Dicke/Breite im Bereich von 0,33 bis 1,67 mit einem bevorzugten Bereich von 0,4 (leicht rechteckig) bis 1,0 (quadratisch) ergibt.

## Claims

1. Pre-chamber spark plug having a housing which has at the front end thereof a pre-chamber (1) having an ignition electrode (2) which is arranged therein, wherein the ignition electrode comprises a base (7) and electrode pins (6) which protrude from the base, wherein the ignition electrode (2) is formed from a metal sheet which comprises an iridium alloy and the pins (6) in order to form a basket shape are bent from the plane of the base (7), wherein the ignition electrode, in particular the electrode pins, is/are separated from the metal sheet by means of laser-cutting, **characterised in that** the electrode pins (6) have a thickness in the range from 0.2 mm to 0.5 mm and a width in the range from 0.3 mm to 0.6 mm, from which a ratio of thickness/width in the range from 0.33 to 1.67 with a preferred range from 0.4 (slightly rectangular) to 1.0 (square) is produced.

2. Pre-chamber spark plug according to claim 1, **characterised in that** the pins (6) are bent substantially orthogonally from the plane of the base (7).

3. Pre-chamber spark plug according to claim 1, **characterised in that** the pins (6) are bent at an angle < 90°, preferably from 81° to 89°, from the plane of the base (7).

4. Pre-chamber spark plug according to any one of claims 1 to 3, **characterised in that** the electrode pins (6) are bent into their basket shape by means of hot-bending.

5. Pre-chamber spark plug according to any one of claims 1 to 4, **characterised in that** the ignition electrode (2) comprises IrRh5 or IrRh10 or IrRh3Nbl.

6. Pre-chamber spark plug according to any one of claims 1 to 5, **characterised in that** the ignition electrode (2) comprises four, six or eight electrode pins (6).

7. Pre-chamber spark plug according to any one of claims 1 to 6, **characterised in that** the ignition electrode (2) comprises an arrangement of two individual electrodes (8) one above the other or one behind the other, wherein the number of respective electrode pins (6) is identical or differs from each other.

8. Pre-chamber spark plug according to claim 7, **characterised in that** the ignition electrodes (2) are welded to each other with or without spacing from each other.

9. Pre-chamber spark plug according to claim 7 or 8, **characterised in that** the arrangement of two individual electrodes (8) comprises a total of eight or twelve electrode pins (6).

10. Pre-chamber spark plug according to any one of claims 7 to 9, **characterised in that** the individual electrodes (8) are rotated relative to each other with the electrode pins (6) thereof so that the electrode pins are not in alignment and complement the basket shape in the bent state.

11. Pre-chamber spark plug according to any one of claims 1 to 10, **characterised in that** the electrode pins (6) are substantially square in cross-section.

12. Ignition electrode (2) for a pre-chamber spark plug which is arranged in a housing (4) which comprises a pre-chamber (1), wherein the ignition electrode (2) comprises a base (7) and electrode pins (6) which protrude from the base and is formed from a metal sheet which comprises an iridium alloy and wherein the pins (6) are bent away substantially orthogonally with respect to the base (7) in order to form a basket shape, in particular for a pre-chamber spark plug according to any one of claims 1 to 11, wherein the ignition electrode is separated from the metal sheet by means of laser-cutting, **characterised in that** the electrode pins (6) have a thickness in the range from 0.2 to 0.5 mm and a width in the range from 0.3 to 0.6 mm, from which a ratio of thickness/width in the range from 0.33 to 1.67 with a preferred range from 0.4 (slightly rectangular) to 1.0 (square) is produced.

13. Method for producing an ignition electrode (2) which comprises a base (7) and electrode pins (6) which protrude from the base for a pre-chamber spark plug, wherein the ignition electrode (2) is cut from a metal sheet which comprises an iridium alloy and afterwards the pins (6) are bent away substantially orthogonally with respect to the base (7) in order to form a basket shape, in particular an ignition electrode according to claim 12, preferably for a pre-chamber spark plug according to any one of claims 1 to 11, wherein the ignition electrode is cut from the metal sheet by means of laser-cutting, **characterised in that** the the electrode pins (6) have a thickness in the range from 0.2 to 0.5 mm and a width in the range from 0.3 to 0.6 mm, from which a ratio of thickness/width in the range from 0.33 to 1.67 with a preferred range from 0.4 (slightly rectangular) to 1.0 (square) is produced.

## Revendications

1. Bougie d'allumage de préchambre avec un boîtier qui comprend, à son extrémité avant, une préchambre (1) avec une électrode d'allumage (2) disposée à l'intérieur de celle-ci, dans laquelle l'électrode d'allumage comprend une base et des pattes d'électrode (6) dépassant de la base (7), dans laquelle l'électrode d'allumage (2) est réalisée à partir d'une tôle en alliage d'iridium et les pattes (6) sont pliées hors du plan de la base (7) afin d'obtenir la forme d'une corbeille, dans laquelle l'électrode d'allumage, plus particulièrement les pattes de l'électrode, sont découpées dans la tôle par découpe au laser,
**caractérisée en ce que** les pattes de l'électrode (6) présentent une épaisseur de l'ordre de 0,2 mm à 0,5 mm et une largeur de l'ordre de 0,3 mm à 0,6 mm, ce qui permet d'obtenir un rapport épaisseur/largeur de l'ordre de 0,33 à 1,67 avec une plage préférée de 0,4 (légèrement rectangulaire) à 1,0 (carré).

2. Bougie d'allumage de préchambre selon la revendication 1, **caractérisée en ce que** les pattes (6) sont pliées hors du plan de la base (7) de manière approximativement orthogonale.

3. Bougie d'allumage de préchambre selon la revendication 1, **caractérisée en ce que** les pattes (6) sont pliées avec un angle < 90°, de préférence de 81° à 89°, hors du plan de la base (7).

4. Bougie d'allumage de préchambre selon l'une des revendications 1 à 3, **caractérisée en ce que** les pattes de l'électrode (6) sont pliées dans leur forme de corbeille par pliage à chaud.

5. Bougie d'allumage de préchambre selon l'une des revendications 1 à 4, **caractérisée en ce que** l'électrode d'allumage (2) est constituée de IrRh5 ou de IrRh10 ou de IrRh3Nb1.

6. Bougie d'allumage de préchambre selon l'une des revendications 1 à 5, **caractérisée en ce que** l'électrode d'allumage (2) comprend quatre, six ou huit pattes d'électrode (6).

7. Bougie d'allumage de préchambre selon l'une des revendications 1 à 6, **caractérisée en ce que** l'électrode d'allumage (2) comprend une disposition de deux électrodes individuelles (8) l'une sur l'autre ou l'une derrière l'autre, dans laquelle les nombre de pattes d'électrodes (6) respectives sont identiques ou différents.

8. Bougie d'allumage de préchambre selon la revendication 7, **caractérisée en ce que** les électrodes d'allumage (2) sont soudées entre elles avec ou sans distance entre elles.

9. Bougie d'allumage de préchambre selon la revendication 7 ou 8, **caractérisée en ce que** la disposition de deux électrodes individuelles (8) comprend en tout huit ou douze pattes d'électrodes (6).

10. Bougie d'allumage de préchambre selon l'une des revendications 7 à 9, **caractérisée en ce que** les électrodes individuelles (8) sont tournées les unes par rapport aux autres, avec leurs pattes d'électrodes (6), de sorte que les pattes d'électrodes ne sont pas alignées et se complètent, lorsqu'elles sont pliées, afin de constituer la forme de corbeille.

11. Bougie d'allumage de préchambre selon l'une des revendications 1 à 10, **caractérisée en ce que** les pattes d'électrodes (6) présentent une section transversale approximativement carrée.

12. Électrode d'allumage (2) pour une bougie d'allumage de préchambre, qui est disposée dans un boîtier (4) comprenant une préchambre (1), dans laquelle l'électrode d'allumage (2) comprend une base (7) et des pattes d'électrode (6) dépassant de la base, et est réalisée à partir d'une tôle constituée d'un alliage d'iridium et dans laquelle les pattes (6) sont pliées de manière approximativement orthogonale par rapport à la base (7) afin d'obtenir une forme de corbeille, plus particulièrement pour une bougie d'allumage de préchambre selon l'une des revendications 1 à 11, dans laquelle l'électrode d'allumage est découpée dans la tôle par découpage au laser, **caractérisée en ce que** les pattes d'électrode (6) présentent une épaisseur de l'ordre de 0,2 mm à 0,5 mm et une largeur de l'ordre de 0,3 mm à 0,6 mm, ce qui permet d'obtenir un rapport épaisseur/largeur de l'ordre de 0,33 à 1,67 avec une plage préférée de 0,4 (légèrement rectangulaire) à 1,0 (carré).

13. Procédé de fabrication d'une électrode d'allumage (2), comprenant des pattes d'électrode (6) dépassant de la base (7), pour une bougie d'allumage de préchambre, dans laquelle l'électrode d'allumage (2) est découpée dans une tôle constituée d'un alliage d'iridium puis les pattes (6) sont pliées de manière approximativement orthogonale par rapport à la base (7) afin d'obtenir une forme de corbeille, plus particulièrement une électrode d'allumage selon la revendication 12, de préférence pour une bougie d'allumage de préchambre selon l'une des revendications 1 à 11, dans laquelle l'électrode d'allumage est découpée dans la tôle par découpage au laser,
**caractérisée en ce que** les pattes d'électrode (6) présentent une épaisseur de l'ordre de 0,2 mm à 0,5 mm et une largeur de l'ordre de 0,3 mm à 0,6 mm, ce qui permet d'obtenir un rapport épaisseur/largeur de l'ordre de 0,33 à 1,67 avec une plage préférée de 0,4 (légèrement rectangulaire) à 1,0 (carré).
